# EUROPEAN PATENT SPECIFICATION

(11) **EP 0 334 454 B1**
(45) Date of publication and mention of the grant of the patent: **22.06.1994**
(21) Application number: 89200727.9
(22) Date of filing: 21.03.1989
(51) Int. Cl.: C08G 67/02

(54) **Polyketone related polymers**
Von Polyketonen abgeleitete Polymere
Polymères dérivés de polycétones

(30) Priority: 21.03.1988 NL 8800699
(43) Date of publication of application: 27.09.1989
(73) Proprietor: SHELL INTERNATIONALE RESEARCH MAATSCHAPPIJ B.V., 2596 HR Den Haag (NL)
(72) Inventor: Van Broekhoven, Johannes Adrianus Maria, NL-1031 CM Amsterdam (NL)

(56) References cited:
- US-A- 2 495 292
- US-A- 3 979 373

## Description

The invention relates to novel polymers which can be thought of as polyketone derivatives, as they may be prepared starting from alternating carbon monoxide/α-olefin polymers.

Polymers of carbon monoxide with one or more α-olefins in which the monomer units are randomly distributed can be prepared by contacting the monomers with a radical catalyst, such as a peroxide. These polymers contain functional carbonyl groups and are therefore also referred to as polymeric polyketones. The carbonyl groups present in these polymeric polyketones can be converted into secondary alcohol groups by catalytic hydrogenation. Both the carbonyl groups present in the polymeric polyketones and the secondary alcohol groups present in the polymeric polyketones obtained occur randomly distributed within the polymers. A special class of polymeric polyalcohols is formed by the polyvinyl alcohols, which can be prepared by hydrolysis or saponification of polyvinyl acetates. Unlike the afore-mentioned polymeric polyalcohols prepared from polyketones, the polyvinyl alcohols have a regular structure in which secondary alcohol groups and methylene groups occur in alternating order. Although, in general, polyvinyl alcohols have excellent properties, their thermal stability is somewhat unsatisfactory. This is due to their special structure, in which there is a methylene group between every two successive secondary alcohol groups, as a result of which the liberation of water leads to the formation of a system of conjugated double bonds in the polymer.

Speculating that the risk of the formation of a system of conjugated double bonds might be removed by changing the special structure of the polyvinyl alcohols, and that thus their thermal stability might be improved, the Applicant has carried out an investigation into the preparation of linear polymeric polyalcohols which are closely related to polyvinyl alcohols but in which there is an ethylene group or a monoalkyl-substituted ethylene group between every two successive secondary alcohol groups. It was assumed that such linear polymeric polyalcohols could be prepared by the catalytic hydrogenation of linear polymeric polyketones obtained by the polymerization of carbon monoxide with one or more α-olefins, provided that in these polyketones the monomer units originating in carbon monoxide and the units originating in the α-olefins occur in alternating order.

Earlier research done by the Applicant had already shown that such linear alternating polyketones can be prepared by contacting the monomers at an elevated temperature and pressure with a catalyst composition based upon, for example,
a) a palladium compound,
b) an anion of an acid with a pKa of less than 6, and
c) a bisphosphine of the general formula (R₁)₂P-R-P(R₁)₂, in which R₁ represents an optionally polar-substituted aryl group and R is a bivalent organic bridging group containing at least two carbon atoms in the bridge.

At first, the results of the Applicant's efforts to prepare linear polymeric polyalcohols in which secondary alcohol groups and, optionally, monoalkyl-substituted ethylene groups occur in alternating order, by way of the catalytic hydrogenation of the alternating polyketones obtained as described hereinbefore, were very disappointing. The investigation involved various catalyst compositions which per se had been found suitable for the almost quantitative conversion of monoketones, such as acetone, into the corresponding secondary alcohols. In some cases, these catalyst compositions when used for the hydrogenation of the alternating polyketones failed to produce any reaction; in other cases, there was some reaction, but this led to a complex polymer mixture in which the alternating character of the starting material was lost altogether.

Among the tested catalyst compositions, however, there was one group which did produce a surprising and altogether unexpected result. These are the catalyst compositions which comprise a complex ruthenium carbonyl compound and an iodide. Contacting an alternating carbon monoxide/ethene copolymer prepared in the afore-described manner at an elevated temperature and pressure and in the presence of hydrogen with a solution of such a catalyst composition in an organic solvent afforded an entirely novel polymer material in high yield. Instead of the expected linear polymeric alternating polyalcohol, a linear polymer was obtained in which ethylene groups and 2,5-tetrahydrofurandiyl groups occurred in alternating order. Apparently, a combination of hydrogenation on the one hand and dehydration with ring closure on the other hand came about under the influence of this catalyst composition. Linear polymers in which ethylene groups and 2,5-tetrahydrofurandiyl groups alternate with one another are novel. Novel are also such polymers in which at least part of the ethylene groups contain one alkyl substituent and/or in which at least part of the 2,5-tetrahydrofurandiyl groups contain an alkyl substituent in the 3-position. Such polymers can be obtained in a manner corresponding to that of the non-alkyl-substituted polymers, by applying the conversion to an alternating polyketone which was prepared from a monomer mixture which, in addition to carbon monoxide, contained one or more other α-olefins instead of or in combination with ethene.

The present patent application therefore relates to novel polyketone related polymers characterized by consisting of linear chains in which units A and units B occur in alternating order and in which the units A are the same or different optionally monoalkyl-substituted ethylene groups and the units B are the same or different optionally 3-alkyl-substituted 2,5-tetrahydrofurandiyl groups. The patent application further relates to the preparation of these novel polymers.

If at least part of the ethylene groups and/or at least part of the 2,5-tetrahydrofurandiyl groups from which the polymers of the invention are synthesized include alkyl substituents, the alkyl substituents are preferably methyl groups. Such polymers can be obtained by applying the conversion to an alternating polyketone prepared from a monomer mixture containing, in addition to carbon monoxide, propene or a mixture of ethene and propene.

As described hereinbefore, the polymers of the invention can be prepared by contacting a linear polymer of carbon monoxide with one or more α-olefins, in which polymer units originating from carbon monoxide and units originating from the used α-olefins(s) alternate, with hydrogen, at an elevated temperature and pressure and in the presence of a catalyst composition comprising a solution of a complex ruthenium carbonyl compound and an iodide dissolved in an organic solvent. 2-Methoxyethanol has been found to be a very suitable organic solvent for the catalyst composition. The complex ruthenium carbonyl compound that is required for the catalytic conversion can be taken up in the organic solvent as such or it may be formed in situ, by taking up an other ruthenium compound, such as ruthenium (acetyl acetonate)₃, in the solvent and carrying out the conversion of the alternating carbon monoxide/α-olefin copolymer in an atmosphere containing carbon monoxide in addition to hydrogen. Methyl iodide has been found to be a very suitable iodide component in the catalyst composition. Besides the complex ruthenium carbonyl compound and the iodide, further components, such as hydrogenation promoters and dehydration promoters, may be included in the catalyst solution. An example of a suitable hydrogenation promoter is triphenyl phosphineoxide and an example of a suitable dehydration promoter is acetic acid. The preparation of the polymers of the invention by employing the ruthenium-containing catalyst compositions described hereinbefore is preferably carried out at a temperature of from 75 to 200°C and a hydrogen pressure of from 5 to 200 bar.

The polymers of the invention are preferably prepared starting from an alternating polymer of carbon monoxide with one or more α-olefins, which polymer has been obtained by polymerizing the monomers using a catalyst composition based upon the components a), b) and c) mentioned hereinbefore. This polymerization is preferably carried out by contacting a mixture of carbon monoxide and one of more α-olefins at a temperature of from 40 to 120°C, an overall pressure of from 20 to 150 bar and an α-olefin/carbon monoxide partial pressure ratio of from 0.5 to 5 with a solution of a catalyst composition in a diluent in which the polymers are insoluble or virtually insoluble, which catalyst composition is based upon
a) a palladium salt of a carboxylic acid,
b) an anion of an acid with a pKa of less than 2 in a quantity of 0.5-50 mol per mol palladium, and
c) a bisphosphine of the general formula (R₁)₂P-R-P(R₁)₂, in which R₁ represents a phenyl group containing one or more alkoxy substituents at least one of which occupies an ortho position relative to the phosphorus atom, and in which R is a bivalent organic bridging group containing three atoms in the brigde at least two of which are carbon atoms, in a quantity of from 0.5 to 2 mol per mol palladium,
the quantity of catalyst composition used per mol of α-olefin to be polymerized being such as to contain 10⁻⁷ to 10⁻³ mol palladium.

Special preference is given to polymerization in which a mixture of carbon monoxide with ethene or ethene and propene is contacted at a temperature of from 50 to 100°C, an overall pressure of from 30 to 100 bar and an α-olefin/carbon monoxide partial pressure ratio of from 0.6 to 3.5, with a solution of a catalyst composition in methanol, which catalyst composition is based upon
a) palladium acetate,
b) trifluoroacetic acid in a quantity of from 1 to 25 mol per mol palladium, and
c) 1,3-bis[bis(2-methoxyphenyl)phosphino]propane in a quantity of from 0.75 to 1.5 mol per mol palladium,
and in which such a quantity of catalyst composition per mol of α-olefin to be polymerized is used as to contain 10⁻⁶ to 10⁻⁴ mol palladium.

The invention will now be illustrated with the aid of the following examples.

### Example 1

A carbon monoxide/ethene copolymer was prepared as follows. A mechanically stirred autoclave having a volume of 4 l was charged with 2 l methanol. After the contents of the autoclave were brought to 65°C, ethene and carbon monoxide were pressed in to respective partial pressures of 18 and 36 bar. Subsequently, a catalyst solution was introduced into the autoclave which comprised
18 ml methanol,
0.03 mmol palladium acetate,
0.06 mmol para-toluenesulphonic acid, and
0.03 mmol 2-methyl,2-(diphenylphosphinomethyl)-1,3-bis(diphenylphosphino)propane.

The pressure was kept at 55 bar by pressing in a 1:1 carbon monoxide/ethene mixture. After 10 hours, polymerization was terminated by cooling down to room temperature and releasing the pressure. The polymer was filtered off, washed with methanol and dried at 70°C. The product was 96 g copolymer. The polymerization rate was 3200 g copolymer/g palladium.hour. With the aid of ¹³C-NMR analysis it was established that the copolymer consisted of linear chains in which units -(CO)- and units -(C₂H₄)- occurred in alternating order.

### Example 2

A mechanically stirred autoclave with a volume of 300 ml was charged with 100 ml 2-methoxyethanol. Herein were consecutively suspended 10 g of a catalyst comprising 50% nickel supported on a carrier, and 10 g of the carbon monoxide/ethene copolymer prepared as described in Example 1. The autoclave was flushed with nitrogen, after which hydrogen was pressed in to a pressure of 50 bar. The contents of the autoclave were brought to 200°C. After 16 hours, the reaction mixture was cooled down to room temperature and the pressure was released. After filtration of the reaction mixture to remove the catalyst and unconverted carbon monoxide/ethene copolymer, water was added to the filtrate, allowing 6 g of polymer to precipitate in the form of a white dust. For further analysis, the polymer was dissolved in hexafluoroisopropanol. As shown by ¹³C-NMR analysis of this solution, the polymer obtained contained no carbonyl groups. It was further found that the product was formed of a complex mixture of polymeric structures in which the alternating character of the starting material had been lost entirely. In the product, the presence, inter alia, of alcohol groups, ether groups and polymethylene groups was established.

### Example 3

Example 2 was substantially repeated, but with the following differences
a) 100 ml of ortho-cresol instead of 2-methoxyethanol was introduced into the autoclave and herein, first of all, 10 g polymer was dissolved and next, 10 g copper chromite catalyst was suspended, and
b) after filtration of the reaction mixture, the polymer was precipitated with methanol.

As shown by ¹³C-NMR analysis of the product, no significant degree of hydrogenation had taken place.

### Example 4

Example 2 was substantially repeated, the difference being that a cobalt phosphine complex was used as the catalyst that was soluble in the reaction medium.

It was established by analysis that no reaction had taken place.

### Example 5

A stirred autoclave having a volume of 300 ml was charged with 100 ml 2-methoxyethanol. Into this, 10 g of the carbon monoxide/ethene copolymer prepared as described in Example 1 was introduced. Then, a catalyst solution was added which comprised
10 ml acetic acid,
0.2 g ruthenium(acetyl acetonate)₃,
0.2 g triphenyl phosphineoxide, and
1 ml methyl iodide.

The autoclave was degassed with nitrogen and subsequently carbon monoxide and hydrogen were pressed in, to partial pressures of 15 bar and 40 bar, respectively. The contents of the autoclave were brought to 150°C. After 4 hours, the reaction mixture was cooled down to room temperature and the pressure was released. The reaction product which was obtained in the form of a viscous oil was extracted with methanol in order to remove solvent and catalyst. Drying of the extraced reaction product afforded a hard glassy material in a yield of 90%, calculated on the starting carbon monoxide/ethene copolymer.

With the aid of ¹³C-NMR analysis, combined with elementary analysis, it was established that the product obtained was a polymer consisting of linear chains in which ethylene units and 2,5-tetrahydrofurandiyl units occurred in alternating order.

Of Examples 1-5, Example 5 is in accordance with the invention. Example 1 describes the preparation of an alternating copolymer of carbon monoxide and ethene. Examples 2-4 relate to hydrogenation experiments and fall outside the scope of the invention. They have been included in the patent application for comparison.

## Claims

1. Polyketone related polymers, characterized in that they consist of linear chains in which units A and units B occur in alternating order and that the units A, being the same or different, are ethylene groups which optionally carry mono-alkyl-substituents and that the units B, being the same or different, are 2,5-tetrahydrofurandiyl groups which optionally carry 3-alkyl-substituents.

2. Polymers as claimed in claim 1, characterized in that if at least part of the ethylene groups and/or at least part of the 2,5-tetrahydrofurandiyl groups include alkyl substituents, these alkyl substituents are methyl groups.

3. Process for the preparation of polymers as claimed in claim 1, characterized in that a linear polymer of carbon monoxide with one or more α-olefins, in which polymer units originating from carbon monoxide and units originating from the used α-olefin(s) alternate, is contacted with hydrogen at an elevated temperature and pressure and in the presence of a catalyst composition comprising a solution of a complex ruthenium carbonyl compound and an iodide dissolved in an organic solvent.

4. A process as claimed in claim 3, characterized in that the complex ruthenium carbonyl compound required for the catalytic conversion of the carbon monoxide/α-olefin polymer is formed in situ by taking up an other ruthenium compound, such as ruthenium(acetyl acetonate)₃, in the solvent and carrying out the conversion in an atmosphere containing carbon monoxide in addition to hydrogen.

5. A process as claimed in claim 3 or 4, characterized in that the iodide component used in the catalyst composition is methyl iodide.

6. A process as claimed in one or more of claims 3-5, characterized in that, in addition, the catalyst composition comprises a hydrogenation promoter, such as triphenyl phosphine oxide and/or a dehydration promoter, such as acetic acid.

7. Process as claimed in one or more of claims 3-6, characterized in that it is carried out at a temperature of from 75 to 200°C and a hydrogen pressure of from 5 to 200 bar.

## Patentansprüche

1. Von Polyketonen abgeleitete Polymere, dadurch gekennzeichnet, daß sie aus linearen Ketten bestehen, in denen Einheiten A und Einheiten B in alternierender Reihenfolge vorkommen, und daß die Einheiten A, die gleich oder verschieden sind, Ethylengruppen sind, die gegebenenfalls Monoalkylsubstituenten tragen, und daß die Einheiten B, die gleich oder verschieden sind, 2,5-Tetrahydrofurandiylgruppen sind, die gegebenenfalls 3-Alkylsubstituenten tragen.

2. Polymere, wie in Anspruch 1 beansprucht, dadurch gekennzeichnet, daß, wenn wenigstens ein Teil der Ethylengruppen und/oder wenigstens ein Teil der 2,5-Tetrahydrofurandiylgruppen Alkylsubstituenten enthalten, diese Alkylsubstituenten Methylgruppen sind.

3. Verfahren zur Herstellung von Polymeren, wie in Anspruch 1 beansprucht, dadurch gekennzeichnet, daß ein lineares Polymer von Kohlenmonoxid mit einem oder mehreren α-Olefinen, wobei Polymereinheiten, die von Kohlenmonoxid ausgehen, und Einheiten, die von den verwendeten α-Olefinen ausgehen, alternieren, mit Wasserstoff bei erhöhter Temperatur und erhöhtem Druck und in Gegenwart einer Katalysatorzusammensetzung kontaktiert wird, die eine Lösung einer in einem organischen Lösungsmittel gelösten komplexen Rutheniumcarbonylverbindung und ein Iodid umfaßt.

4. Ein Verfahren, wie in Anspruch 3 beansprucht, dadurch gekennzeichnet, daß die komplexe Rutheniumcarbonylverbindung, die für die katalytische Umwandlung des Kohlenmonoxid/α-Olefin-Polymers erforderlich ist, in situ durch Aufnehmen einer Rutheniumverbindung, wie Ruthenium(acetylacetonat)₃, in dem Lösungsmittel und durch Ausführen der Umwandlung in einer Atmosphäre, die zusätzlich zu Wasserstoff Kohlenmonoxid enthält, gebildet wird.

5. Ein Verfahren, wie in Anspruch 3 oder 4 beansprucht, dadurch gekennzeichnet, daß die in der Katalysatorzusammensetzung verwendete Iodidverbindung Methyliodid ist.

6. Ein Verfahren, wie in einem oder mehreren der Ansprüche 3 bis 5 beansprucht, dadurch gekennzeichnet, daß die Katalysatorzusammensetzung zusätzlich einen Hydrierungsbeschleuniger, wie Triphenylphosphinoxid, und/oder einen Dehydratisierungsbeschleuniger, wie Essigsäure, umfaßt.

7. Verfahren, wie in einem oder mehreren der Ansprüche 3 bis 6 beansprucht, dadurch gekennzeichnet, daß es bei einer Temperatur von 75 bis 200°C und einem Wasserstoffdruck von 5 bis 200 bar durchgeführt wird.

## Revendications

1. Polymères apparentés à des polycétones, caractérisés en ce qu'ils sont constitués de chaînes linéaires dans lesquelles alternent des motifs A et des motifs B et en ce que les motifs A, qui sont identiques ou différents, sont des groupes éthylène qui portent éventuellement des substituants monoalkyle et en ce que les motifs B, qui sont identiques ou différents, sont des groupes 2,5-tétrahydrofuranediyle qui portent éventuellement des substituants 3-alkyle.

2. Polymères selon la revendication 1, caractérisés en ce que, si au moins une partie des groupes éthylène et/ou au moins une partie des groupes 2,5-tétrahydrofuranediyle portent des substituants alkyle, ces substituants alkyle sont des groupes méthyle.

3. Procédé de préparation de polymères selon la revendication 1, caractérisé en ce que l'on met en contact un polymère linéaire de monoxyde de carbone et d'une ou plusieurs α-oléfines, dans lesquelles alternent des motifs polymères issus du monoxyde de carbone et des motifs issus de la ou des α-oléfines utilisées, avec de l'hydrogène, à une température et sous une pression élevées et en présence d'une composition de catalyseur comprenant une solution d'un composé complexe de ruthénium-carbonyle et un iodure dissous dans un solvant organique.

4. Procédé selon la revendication 3, caractérisé en ce que le composé complexe de ruthénium-carbonyle nécessaire à la conversion catalytique du polymère monoxyde de carbone/α-oléfine se forme in situ en fixant un autre composé de ruthénium, comme le ruthénium(acétonate d'éthyle)₃, dans le solvant, et la conversion a lieu dans une atmosphère contenant du monoxyde de carbone en plus de l'hydrogène.

5. Procédé selon la revendication 3 ou 4, caractérisé en ce que le constituant iodure utilisé dans la composition de catalyseur est l'iodure de méthyle.

6. Procédé selon l'une quelconque des revendications 3-5, caractérisé en ce que, en outre, la composition de catalyseur comprend un promoteur d'hydrogénation, tel que l'oxyde de triphénylphosphine, et/ou un promoteur de déshydratation, tel que l'acide acétique.

7. Procédé selon l'une quelconque des revendications 3-6, caractérisé en ce qu'il est mis en oeuvre à une température de 75 à 200°C et sous une pression d'hydrogène de 5 à 200 bars.
